Europäisches Patentamt

European Patent Office

Office européen des brevets

(11) Publication number: **0 332 372**
**A2**

## (12) EUROPEAN PATENT APPLICATION

(21) Application number: 89302215.2

(51) Int. Cl.⁴: **B01D 11/04**

(22) Date of filing: 06.03.89

(30) Priority: 08.03.88 GB 8805425

(43) Date of publication of application:
13.09.89 Bulletin 89/37

(84) Designated Contracting States:
CH DE FR GB IT LI NL

(71) Applicant: **UNITED KINGDOM ATOMIC
ENERGY AUTHORITY**
**11 Charles II Street**
**London SW1Y 4QP(GB)**

(72) Inventor: **Hardy, Frederick George**
**27 Sylvancroft**
**Ingol Preston PR2 7BL(GB)**

(74) Representative: **Alderman, John Edward et al**
**United Kingdom Atomic Energy Authority**
**Patents Branch 11 Charles II Street**
**London SW1Y 4QP(GB)**

(54) **Phase disengagement in liquid-liquid contactors.**

(57) A liquid-liquid contactor has a column 10 of conventional form with a phase-disengaging zone 20 at the base of the column 10. A dispersion band 22 forms at the interface between the phases in the zone 20, and stress wave energy is applied to the band 22 from an ultrasonic transducer 24. Standing wave conditions are produced in the region of the band 22, and the amplitude of the transducer 24 is adjusted such that coalescence is favoured and the width x of the band 22 is reduced.

EP 0 332 372 A2

## Phase disengagement in liquid-liquid contactors

This invention relates to liquid-liquid contactors and is directed specifically to the enhancement of phase disengagement in such contactors. The invention has application to both stagewise-type contactors, such as mixer-settlers, and to differential or continuous-type contactors such as pulsed columns.

The operational cycle of liquid-liquid contactors in general involves agitation and mixing of substantially immiscible liquids followed by disengagement of the two liquids. In practice, during disengagement of the two liquids, a dispersion or emulsion band forms between the separated phases and the thickness of the dispersion band imposes limitations on the maximum throughput. In industrial mixer-settlers for example, the settlers may constitute up to about 75% of the total volume of the mixer-settlers. Consequently, there is a considerable incentive to improve throughput since this can lead to reduction in settler size and lower the solvent inventory.

According to the present invention there is provided a method of enhancing phase disengagement in a liquid-liquid contactor, the method being characterised by introducing stress wave energy into a phase disengagement zone of the contactor, the amplitude and frequency of the stress wave energy and the geometry of the phase disengagement zone being such that the stress wave energy induces phase coalescence of the dispersed liquid phase. One apparatus provides a liquid-liquid contactor having a phase disengagement zone and means is provided for introducing stress wave energy into the disengagement zone, the arrangement, in terms of amplitude and frequency of the applied stress wave energy and the geometry of the phase disengagement zone, being such that the applied stress wave energy induces phase coalescence of the dispersed phase.

The invention has particular application to the dispersion band that tends to form in the phase disengagement zone. It is believed that significant phase coalescence is induced if the frequency of applied stress wave energy relative to the dimensioning of the disengagement zone is such that the dispersion band occupies a region where standing wave conditions exist. More specifically it is believed that phase coalescence within the dispersion band is enhanced if standing wave nodes exist within the region occupied by the dispersion band as it appears that localised increases in the droplet population of the dispersed phase occur at the standing wave nodes thereby favouring droplet coalescence. An additional factor in inducing coalescence is the intensity or amplitude of the applied stress wave energy. In practice, it has been found that the intensity must be controlled within certain limits otherwise the applied stress wave energy is either of intensity insufficient to induce phase coalescence or, if in excess of such limits, produces intense agitation which is not conducive to droplet coalescence.

Typically, the stress wave energy generator is an ultrasonic transducer. The transducer may have a specific operating frequency and, in this event, the phase disengagement zone of the contactor may be designed with a geometry such that, at the operating frequency of the transducer, standing wave conditions are created in the region occupied by the dispersion band.

The stress wave generator may be located externally of the structure defining the phase disengaging zone of the contactor and may be coupled either directly to the structure or via a waveguide.

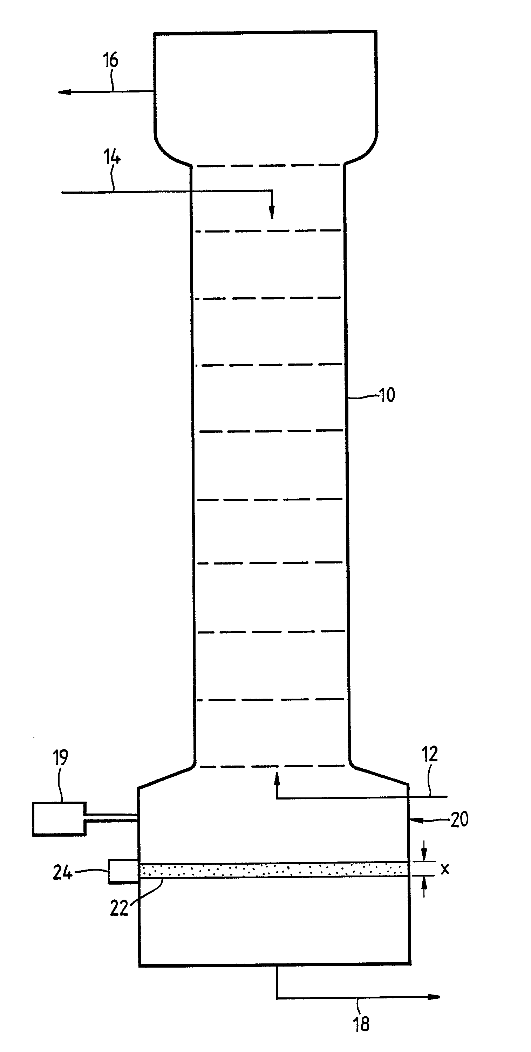

To promote further understanding of the invention, one embodiment will now be described by way of example only with reference to the accompanying drawing, the sole Figure of which is a diagrammatic view of a pulsed column for carrying out solvent extraction of solute from an aqueous phase.

As shown, the column 10 which may be of conventional form (for example of the perforated plate type) has inlets 12, 14 respectively for the introduction of an organic solvent phase and solute-containing aqueous phase and off-takes 16, 18 respectively for discharge of the solute-bearing solvent and the raffinate derived from the aqueous phase. A pulsation-applying device 19 serves to pulse the contents of the column in any one of the conventional ways. At the base of the column 10, there is a phase-disengaging zone 20 part of which is occupied by the dispersion band 22 which forms at the interface between the phases.

In accordance with the invention, stress wave energy is applied to the dispersion band 22 by means of an ultrasonic transducer 24 which is located externally of the column at a level corresponding to the position of the dispersion band 22. The cross-sectional geometry of the phase-disengaging zone 20 is so designed, in relation to the operational frequency of the transducer 24, that standing wave conditions are produced in the region occupied by the dispersion band. The amplitude of the transducer output is adjusted so as to avoid a regime in which the applied ultrasound tends to produce intense agitation of the dispersion band - instead the intensity is adjusted to a level where coalescence is favoured so that the width $x$

of the dispersion band is reduced.

Droplet population of the dispersed phase in the dispersion band is increased and the specific superficial area of each droplet is increased and this eventually results in an increased rate of droplet coalescence and an increased throughput for the column or other contactor. Droplet coalescence occurs at a macro scale rather than a molecular scale.

## Claims

1. A method of enhancing phase disengagement in a liquid-liquid contactor, the method being characterised by introducing stress wave energy into a phase disengagement zone (20) of the contactor (10), the amplitude and frequency of the stress wave energy and the geometry of the phase disengagement zone being such that the stress wave energy induces phase coalescence of the dispersed liquid phase.

2. A method as claimed in Claim 1, characterised in that the phase disengagement zone (20) has a geometry such that standing waves are created from the stress wave energy.

3. A method as claimed in claim 1 or Claim 2, characterised in that the amplitude of the stress wave energy is such that coalescence is favoured.

4. A method as claimed in any one of the preceding Claims, characterised in that the stress wave energy is produced by a generator (24) located externally of the contactor (20) and coupled to the contactor.

5. A method as claimed in Claim 4, characterised in that the generator is coupled indirectly to the contactor via a waveguide.

6. A method as claimed in any preceding claim, characterised in that the stress wave energy is introduced into a dispersion band in the zone.